# FASCICULE DE BREVET EUROPEEN

(11) **EP 2 938 537 B1**
(45) Date de publication et mention de la délivrance du brevet: **06.02.2019**
(21) Numéro de dépôt: 13814077.7
(22) Date de dépôt: 16.12.2013
(51) Int. Cl.: B64C 11/20, B64C 27/00, B32B 5/24, B23P 15/00, B32B 1/00, B64C 3/28, F42D 5/04, F41H 5/04, B64C 27/473, F42D 5/045

(54) **DISPOSITIF D'ABSORPTION D'ÉNERGIE POUR ÉLÉMENT DE STRUCTURE D'AÉRONEF**
ENERGIEABSORBTIONSVORRICHTUNG FÜR EIN FLUGZEUGSTRUKTURELEMENT
ENERGY ABSORBTION DEVICE FOR STRUCTURAL ELEMENT OF AN AIRCRAFT

(30) Priorité: 27.12.2012 FR 1262896
(43) Date de publication de la demande: 04.11.2015
(73) Titulaire: AIRBUS (SAS), 31700 Blagnac (FR)
(72) Inventeur: PETIOT, Caroline, F-91940 Les Ulis (FR); BERMUDEZ, Michel, F-92150 Suresnes (FR); MESNAGE, Didier, F-92210 Saint Cloud (FR)
(74) Mandataire: Gicquel, Olivier Yves Gérard
(86) Numéro de dépôt international: PCT/EP2013/076754
(87) Numéro de publication internationale: WO 2014/102085

(56) Documents cités:
- EP-A1- 0 296 964
- DE-A1-102005 019 455
- US-A- 5 814 250
- US-A1- 2005 085 146
- US-A1- 2008 265 095
- US-A1- 2011 005 382

## Description

### Domaine de l'invention

L'invention concerne un dispositif d'absorption d'énergie passif pour élément de structure d'aéronef, tel qu'une pale, une aube ou tout autre élément d'hélice, de voilure ou de fuselage d'un aéronef. Ce dispositif d'absorption d'énergie est prévu pour être intégré dans un élément de structure d'aéronef afin de limiter le risque de détachement partiel ou de fragmentation de l'élément de structure en cas d'impact et, ainsi, réduire la vulnérabilité de cet élément de structure à la menace d'impact durant le vol de l'aéronef.

L'invention concerne aussi un élément de structure tournant d'aéronef comportant un tel dispositif d'absorption d'énergie cinétique. Elle concerne en outre un procédé d'intégration de ce dispositif d'absorption d'énergie cinétique.

L'invention trouve des applications dans le domaine de l'aéronautique et, notamment, dans le domaine des aéronefs à motorisation arrière. Elle trouve, en particulier, des applications dans le domaine de la fabrication des turbopropulseurs et des rotors d'hélicoptères ainsi que dans le domaine de la fabrication des aubes en composites. L'invention peut également trouver des applications dans la réalisation des zones de bord d'attaque des voilures fixes d'avion ou de fuselage arrière.

### Etat de la technique

Il est connu, dans le domaine de l'aéronautique, que les éléments de structure tournants et les éléments de voilure sont soumis à un risque élevé d'impacts d'oiseaux, de grêle, de blocs de glace, de cailloux ou encore de morceaux de pneu ou autre débris durs rencontrés par l'aéronef en vol, à l'atterrissage ou au décollage.

Les éléments tournants associés au moteur ou à la voilure mobile d'un aéronef, par exemple les hélices ou éléments d'hélices comme les aubes et les pales d'aéronef, sont particulièrement exposés au contact dynamique généré par les oiseaux ou autres débris rencontrés par l'aéronef. En particulier, les pales en matériaux composites de certains moteurs sont particulièrement vulnérables. Or, ces impacts sont très énergétiques car la vitesse de l'impact peut atteindre 100m/s. Ils peuvent donc s'avérer particulièrement vulnérables pour les éléments de structure tournants et, dans des cas extrêmes, entraîner le crash de l'aéronef.

Dans le cas des moteurs d'aéronef à hélices contrarotatives à motorisation arrière, les moteurs sont généralement situés à proximité du fuselage. Comme ce type de moteur n'est généralement pas caréné, un impact sur les éléments tournants du moteur peut générer le détachement d'un élément du moteur ou d'une partie de cet élément de moteur, avec toutes les conséquences que cela induit pour le vol de l'aéronef. Il existe donc, lors d'un impact, un fort risque de détachement partiel ou complet d'un élément tournant du moteur et de conséquences en chaîne avec le ré-impact de cet élément détaché sur un autre élément tournant du moteur ou d'un moteur opposé, la vitesse d'impact sur un élément de fuselage arrière étant alors estimée à 300m/s.

On connait de la demande de brevet US 2011/005382 ou du brevet US 5.814.250 des structures en sandwich constituant une barrière légère ou armure balistique pour des bâtiments ou des véhicules comme des aéronefs. Ces structures sont du type comprenant une ou plusieurs séries de deux feuillets rigides entourant un coeur généralement en mousse.

L'art antérieur rapporte aussi dans la demande de brevet US 2005/0085146 un dispositif d'isolation comprenant une première couche de tissu de polymère de forte résistance, une couche de matière de structure cellulaire disposée sur la première couche et une seconde couche de tissu de polymère de forte résistance. Ce dispositif d'isolation est utile pour protéger des réservoirs de fluides comme de l'essence ou des systèmes par exemple d'atterrissage d'avions, de projectiles ou de chocs.
Le document US 2008/0265095 divulgue une structure d'aéronef comportant un dispositif d'absorption d'énergie cinétique dans une zone de bord d'attaque.

Toutefois, il existe un besoin spécifique pour éléments de structure d'aéronef susceptible d'être soumis à un impact dynamique, ledit élément comportant un bord d'attaque et un bord de fuite.

Les constructeurs aéronautiques cherchent donc à minimiser au mieux une perte partielle ou totale des éléments tournants des moteurs en cas d'impact en créant des éléments de structure tournants aptes à résister à ces impacts.

### Exposé de l'invention

L'invention a justement pour but de remédier aux inconvénients des techniques exposées précédemment. A cette fin, l'invention propose un élément de structure d'aéronef, tels qu'une voilure fixe d'avion ou des pales, des aubes ou tout autre élément tournant de moteur d'avion ou d'hélicoptère, selon la revendication 1 permettant de réduire la menace liée à l'impact d'oiseaux ou de débris durs.

Pour cela, l'invention propose d'intégrer, dans les éléments de structure, un dispositif permettant d'absorber, de façon passive, l'énergie cinétique générée par l'impact afin d'éviter la fragmentation de cet élément de structure. Ce dispositif d'absorption d'énergie comporte une enveloppe externe réalisée dans un matériau composite tressé résistant à la fragmentation et un coeur en mousse intégrant des éléments de renfort en fibres sèches aptes à dissiper l'énergie cinétique générée par l'impact.

De façon plus précise, l'invention concerne un élément de structure d'aéronef susceptible d'être soumis à un impact dynamique, ledit élément comportant un bord d'attaque et un bord de fuite, comportant un dispositif d'absorption d'énergie cinétique dans une zone du bord d'attaque, ledit dispositif d'absorption d'énergie cinétique comportant:
- une enveloppe externe en matériau composite tressé apte à conserver, après impact, une intégrité,
- un coeur en mousse, contenu dans l'enveloppe externe et apte à remplir au moins partiellement ladite enveloppe externe, ledit coeur en mousse étant apte à absorber au moins partiellement l'énergie cinétique générée par l'impact, et
- des éléments de renfort comportant au moins une préforme en fibres composites sèches intégrée dans le coeur en mousse pour dissiper, en association avec le coeur en mousse, l'énergie cinétique générée par l'impact.

Le dispositif d'absorption d'énergie cinétique de l'invention peut comporter une ou plusieurs des caractéristiques suivantes :
- la préforme en fibres composites sèches forme un textile (appelé aussi tissu) entourant une partie du coeur en mousse.
- les éléments de renfort comportent plusieurs préformes en fibres composites sèches formant chacune un textile apte à entourer une partie du coeur en mousse de façon à cloisonner ledit coeur en mousse.
- les fibres sèches sont en carbone, en aramide et/ou en PBO ou autre.
- l'enveloppe externe comporte une pluralité de plis de mèches imprégnées, tressées avec au moins deux fibres sèches.
- les éléments de renfort comprennent des fils insérés par piquage dans le coeur en mousse.
- les fils sont imprégnés d'une résine durcissante.

Un mode de réalisation concerne un élément de structure tournant d'aéronef, comportant un bord d'attaque et un bord de fuite, comportant un dispositif d'absorption d'énergie cinétique tel que décrit précédemment, situé dans une zone du bord d'attaque.

De plus, l'invention concerne un procédé de fabrication d'un dispositif d'absorption d'énergie cinétique pour être intégré dans un élément de structure d'aéronef susceptible d'être soumis à un impact dynamique tel que décrit précédemment, comportant les opérations suivantes :
a) fabriquer un bloc de mousse,
b) placer une préforme en fibres composites sèches autour du bloc de mousse,
c) disposer une couche complémentaire de mousse autour du bloc de mousse et de la préforme en fibres composites sèches pour former un coeur en mousse, et
d) installation de l'enveloppe externe autour du coeur en mousse obtenu à l'étape c).

Les étapes b) à c) peuvent être répétées en plaçant d'autres préformes en fibres composites sèches autour du coeur en mousse obtenu à l'étape c).

Le procédé peut comporter une opération de piquage des fils dans le coeur en mousse obtenu à l'étape c), cette opération étant effectuée avant l'étape d) d'insertion du coeur en mousse dans l'enveloppe externe.

### Brève description des dessins

La figure 1 représente une vue en coupe d'un exemple d'élément de structure tournant d'aéronef muni du dispositif d'absorption d'énergie de l'invention.
Les figures 2A et 2B représentent le dispositif d'absorption d'énergie de l'invention avec ses préformes en fibres composites sèches intégrée dans le coeur en mousse.
Les figures 3A et 3B représentent le dispositif d'absorption d'énergie de l'invention avec deux couches de préformes en fibres composites sèches intégrées dans le coeur en mousse.
La figure 4 représente une variante du dispositif d'absorption d'énergie des figures 3A et 3B.

### Description détaillée de modes de réalisation de l'invention

L'invention propose un dispositif d'absorption d'énergie cinétique de type passif, destiné à être intégré dans une voilure fixe d'avion, dans un élément de fuselage (exemple fuselage arrière) ou dans une pale, une aube ou tout autre élément de structure tournant d'avion ou d'hélicoptère. Qu'il soit fixe ou tournant, l'élément dans lequel le dispositif d'absorption d'énergie cinétique est intégré sera appelé, par la suite, élément de structure. Cet élément de structure est destiné, d'une part, à absorber ou dissiper l'énergie cinétique générée par un impact et, d'autre part, à empêcher la fragmentation ou la dislocation de cet élément de structure afin qu'il conserve son intégrité même en cas d'impact.

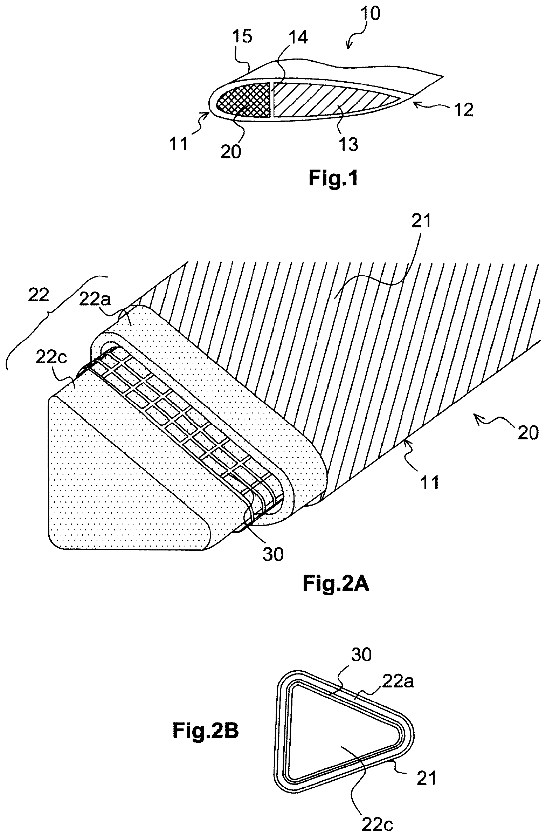

Un exemple d'élément de structure pouvant accueillir le dispositif d'absorption d'énergie cinétique de l'invention est représenté sur la figure 1. Cette figure 1 montre l'exemple d'une pale selon une vue en coupe. Cette pale 10 a une forme de section oblongue avec, à l'avant, un bord d'attaque 11 et, à l'arrière, un bord de fuite 12 opposé au bord d'attaque.

Cette pale 10 comporte une enveloppe de pale 15 à l'intérieur de laquelle est logé un corps de pale 13. L'enveloppe de pale 15 contient également le dispositif d'absorption d'énergie cinétique 20 de l'invention. Ce dispositif d'absorption d'énergie cinétique 20 est placé dans la zone du bord d'attaque 11 ou dans tout autre corps de la pale comme par exemple le corps de pale 13. En effet, lors d'un impact, c'est la zone du bord d'attaque 11, situé en extérieur de l'hélice, qui reçoit l'impact en premier. C'est donc cette zone 11 qui doit être capable d'absorber l'énergie cinétique générée par l'impact.

Pour assurer une unité entre le corps de pale 13 et le dispositif d'absorption d'énergie cinétique 20, une interface dispositif/corps de pale 14 est logée entre le dispositif d'absorption d'énergie cinétique 20 et le corps de pale 14 et assure l'accolement du dispositif d'absorption d'énergie cinétique avec le corps de pale à l'intérieur de l'enveloppe de pale 15.

Il est à noter que la figure 1 représente un exemple de pale. Toutefois, tout élément de structure est constitué de façon similaire d'une enveloppe d'élément, d'un corps d'élément, d'une interface et du dispositif d'absorption d'énergie cinétique de l'invention. Ainsi, quel que soit l'élément de structure considéré (pale, aube, voilure fixe, fuselage, etc.) ce dernier comporte un bord d'attaque dans lequel est logé le dispositif d'absorption d'énergie cinétique de l'invention.

Selon l'invention, le dispositif d'absorption d'énergie cinétique comprend un coeur en mousse ainsi que des éléments de renfort, logés dans une enveloppe externe. Cette enveloppe externe du dispositif d'absorption d'énergie cinétique peut s'interfacer avec l'enveloppe de pale 15. L'enveloppe externe entoure alors à la fois le coeur en mousse, les éléments de renfort et le corps de pale 13. Dans ce cas, la totalité de l'enveloppe de pale 15 est réalisée de façon identique pour s'interfacer à l'enveloppe externe telle qu'elle sera décrite ultérieurement.

Un exemple de ce dispositif d'absorption d'énergie cinétique est représenté sur les figures 2A et 2B.

La figure 2A représente une vue en perspective partiellement éclatée d'un dispositif d'absorption d'énergie cinétique selon l'invention. La figure 2B représente une vue en coupe de ce même dispositif d'absorption d'énergie cinétique. Ces figures 2A et 2B montrent le dispositif d'absorption d'énergie cinétique de l'invention selon un premier mode de réalisation des éléments de renfort.

Le dispositif d'absorption d'énergie cinétique 20 de l'invention comporte une enveloppe externe 21 dont le rôle est de conserver au mieux l'intégrité de la forme de l'élément de structure après un impact. Cette enveloppe externe 21, qui sera décrite ultérieurement, est remplie par un coeur en mousse 22 dont le rôle est, d'une part, de rigidifier l'enveloppe externe 21 et, d'autre part, d'absorber au moins une partie de l'énergie cinétique générée par l'impact.

Ce coeur de mousse 22 comporte en son sein des éléments de renfort 30 qui permettent de dissiper l'énergie cinétique qui provient de l'impact et qui n'a pas été absorbée par le coeur en mousse 22. Cette dissipation de l'énergie cinétique par les éléments de renfort 30 est obtenue par le frottement des fibres sèches dans le coeur en mousse.

Le dispositif d'absorption d'énergie cinétique, avec son enveloppe externe 21, son coeur en mousse 22 et ses éléments de renfort 30, est destiné à être intégré sur un produit industriel tel qu'une pale ou tout autre élément de structure. Le dispositif d'absorption d'énergie cinétique de l'invention doit donc être apte à s'interfacer avec le produit industriel pour permettre une intégrité de ce produit. Aussi, l'enveloppe externe 21 du dispositif d'absorption d'énergie cinétique contient le coeur en mousse 22 et les éléments de renfort 30 de l'invention mais il peut également contenir d'autres éléments faisant parti du produit industriel.

L'enveloppe externe 21 du dispositif d'absorption d'énergie cinétique de l'invention forme une sorte de housse qui entoure et retient le coeur en mousse 22 et les éléments de renfort 30. L'ensemble est apte à dissiper l'énergie cinétique provenant de l'impact avec une fragmentation contenue ce qui permet d'éviter tout risque de générer des impacts en chaîne. Pour cela, l'enveloppe externe 21 doit pouvoir atteindre un fort niveau de déformation au moment de l'impact sans perdre son intégrité. Elle doit donc avoir un comportement en déformation. Selon l'invention, l'enveloppe externe 21 est réalisée au moyen de matériaux composites tressés. Autrement dit, l'enveloppe externe 21 constitue une tresse de fibres composites. Cette tresse comporte une pluralité de mèches imprégnées à base de renfort fibreux pour assurer l'interfaçage avec le corps de pale ou de tout élément de structure. Elle peut comporter, en particulier, 2 à 4 plis de mèches imprégnées. La tresse comporte également des couches des mèches tressées et imprégnées. Dans ce cas, la tresse est une tresse 2D, c'est-à-dire en deux dimensions.

La tresse composite peut également être une tresse 3D, c'est-à-dire en trois dimensions. Dans ce cas, la tresse composite comporte, en plus de la tresse 2D, un renfort dans l'épaisseur. Le maillage de la tresse est alors plus dense et participe à l'absorption d'énergie.

Quel que soit le type de tresse, 2D ou 3D, les fibres constitutives de cette tresse peuvent être soit du carbone, soit de l'aramide, soit de la mèche d'aramide tressée avec du carbone, ou encore de la fibre PBO (poly-phénylène-2,6-benzobisoxazole) ou autre. La fibre carbone a l'avantage d'être rigide et de se rompre facilement, offrant une dissipation par rupture même lorsque la fibre carbone est dans l'enveloppe externe. Une tresse en fibres permet également une dissipation d'énergie par frottement des fibres entre elles.

L'aramide a l'avantage d'être un matériau plus souple qui se déforme. Les fibres en aramide se déforment. Une tresse en aramide a donc l'avantage d'accompagner la déformation du coeur en mousse et permet également une dissipation de l'énergie par frottement.

On comprend donc que tresser des fibres de carbone avec des fibres en aramide peut apporter l'avantage d'une dissipation par rupture associée à une dissipation par frottement ou à une déformation du produit. Autrement dit, dans une configuration avec de l'aramide, l'aramide apportera l'aptitude à la déformation et garantit le maintien du dispositif pendant l'impact. Dans la configuration d'une enveloppe hybride carbone-aramide, le carbone contribue à réduire la profondeur d'impact ainsi qu'à dissiper de l'énergie cinétique dans la rupture des fibres.

Le coeur en mousse de l'élément de structure de l'invention est constitué d'une mousse pouvant avoir plusieurs degrés de densité. Quelle que soit sa densité, la mousse a pour objectif de remplir au moins partiellement l'enveloppe externe et de lui apporter de la raideur. Elle permet également de maintenir les éléments de renfort 30 en place.

La densité de la mousse peut varier entre 50Kg/m3 et 200Kg/m3.Une mousse de densité plus élevée a l'avantage d'absorber une plus grande quantité d'énergie cinétique. Une mousse de plus faible densité a l'avantage d'alléger l'ensemble du dispositif d'absorption d'énergie cinétique ce qui correspond à un critère constant en aéronautique de diminution de la masse totale de l'aéronef. En outre, une mousse de plus faible densité a l'avantage de pouvoir être injectée, ce qui permet une mise en place plus aisée des éléments de renfort. Quelle que soit sa densité, la mousse garantit la stabilité du dispositif d'absorption d'énergie cinétique pendant le fonctionnement.

Cette mousse peut avoir une forme creuse ou non. Autrement dit, le coeur en mousse peut comporter un centre creux. La mousse ne constitue alors qu'une interface avec l'enveloppe externe pour donner la rigidité à l'enveloppe.

Le coeur en mousse 22 est muni d'éléments de renfort 30 qui permettent de dissiper l'énergie cinétique provenant de l'impact. Selon l'invention, ces éléments de renfort 30 comportent au moins une préforme en fibres composites sèches intégrée dans le coeur en mousse. Cette préforme en fibres composites sèches a une forme de textile ou tissu, ajouré ou non, formant une sorte de filet autour d'une portion du coeur en mousse, appelée bloc de mousse.

Il est connu, dans le domaine de l'aéronautique, de ne pas utiliser de fibres composites sèches dans la fabrication des aéronefs car les fibres composites sèches n'ont pas de tenue, c'est-à-dire qu'elles ne restent pas en position sans liant entre elles. Des fibres composites pré imprégnées sont généralement utilisées. Toutefois, dans l'invention, il a été constaté que des fibres composites sèches pouvaient être encapsulées, c'est-à-dire intégrées au sein d'un coeur en mousse (pour un besoin plus spécifique, la mousse peut être remplacée par un matériau élastomérique à fort pouvoir amortissant), et modifier le comportement de l'ensemble constitué avec le coeur en mousse. En effet, sous l'effet d'un impact, les fibres composites sèches encapsulées produisent, à l'intérieur du coeur en mousse, un frottement apte à absorber au moins une partie de l'énergie cinétique générée par l'impact. Ces fibres composites sèches permettent ainsi une absorption d'énergie par frottement qui ne pourrait être obtenue avec des fibres composites imprégnées.

Selon l'invention, la préforme en fibres composites sèches est placée autour d'un bloc de mousse et l'ensemble constitué du bloc de mousse et de la préforme en fibres composites sèches est intégré dans un moule avec une portion complémentaire de mousse. La préforme de fibres composites sèches se trouve ainsi encapsulée dans le coeur en mousse. Les figures 2A et 2B montrent un dispositif d'absorption d'énergie cinétique 20 avec une préforme en fibres composites sèches 30 encapsulée dans le coeur en mousse 22. Ces figures montrent notamment le bloc de mousse 22c entouré de la préforme en fibres composites sèches 30, elle-même entourée d'une couche de mousse 22a. L'ensemble du coeur en mousse 22 (constitué du bloc de mousse 22c et de la couche de mousse 22a) et de la préforme en fibres composites sèches 30 est entouré de l'enveloppe externe 21 pour former le dispositif d'absorption d'énergie cinétique 20.

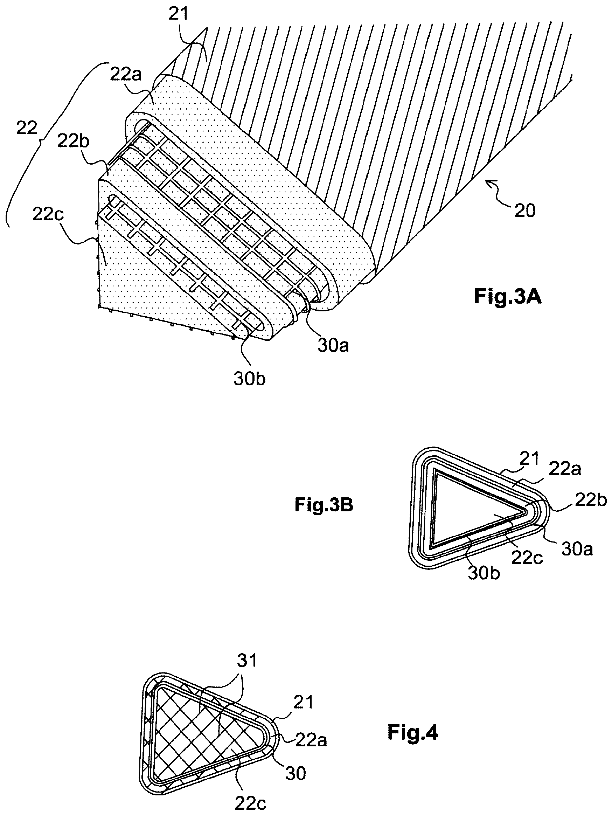

Dans un mode de réalisation de l'invention, plusieurs préformes sont encapsulées dans un même coeur en mousse. Une illustration de ce mode de réalisation est représentée sur les figures 3A et 3B. Comme on le voit sur ces figures, plusieurs préformes en fibres composites sèches 30a, 30b sont insérées au sein du même coeur en mousse 22. Dans ce mode de réalisation, une première préforme en fibres composites sèches 30b entoure un bloc de mousse 22c. Une première couche de mousse 22b entoure la première préforme 30b et le bloc de mousse 22c. Une deuxième préforme en fibres composites sèches 30a entoure cette deuxième couche de mousse 22b. Une troisième couche de mousse 22a entoure l'ensemble constitué de la deuxième préforme en fibres composites sèches 30b, de la deuxième couche de mousse 22b, de la première préforme en fibres composites sèches 30b et du bloc de mousse 22c, le tout étant finalement entouré de l'enveloppe externe 21.

On comprend de ces figures 2A, 2B, 3A et 3B que le dispositif d'absorption d'énergie cinétique de l'invention peut être fabriqué de la façon suivante :
a) fabrication d'un bloc de mousse,
b) installation d'une préforme en fibres composites sèches autour dudit bloc de mousse,
c) intégration d'une couche complémentaire de mousse autour du bloc de mousse entouré de la préforme en fibres composites sèches pour former le coeur en mousse, et
d) installation de l'enveloppe externe autour du coeur en mousse avec sa préforme en fibres composites sèches.

Lorsque plusieurs préformes en fibres composites sèches sont encapsulées dans le coeur en mousse, alors les étapes b) à c) sont répétées en plaçant une deuxième préforme en fibres composites sèches autour du coeur en mousse obtenu à l'étape c). Il est à noter que plusieurs préformes en fibres composites sèches peuvent être encapsulées dans le coeur en mousse en installant des préformes en fibres composites sèches et en intégrant des couches de mousse successivement. Les différentes préformes en fibres composites sèches sont alors parallèles les unes par rapport aux autres dans le coeur en mousse.

Dans une variante de l'invention, les éléments de renfort 30 décrits précédemment peuvent être complétés par des fils de renfort 31 piqués à travers le coeur en mousse. Un exemple d'un coeur en mousse 22 avec une préforme en fibres composites sèches 30 et des fils de renfort 31 est représenté sur la figure 4. Ces fils de renfort 31 sont des fils en carbone, continus ou discontinus, relativement souples, piqués à des intervalles réguliers ou à des intervalles irréguliers dans le coeur en mousse. Ces fils 31 en carbone sont imprégnés d'une résine durcissante. Ainsi, lors d'un impact, ces fils de renfort 31 sont aptes à dissiper, par rupture, une partie de l'énergie cinétique générée par l'impact.

On comprendra qu'un fil a une tension différente s'il est continu ou s'il est discontinu. Dans le cas d'un fil continu, l'endommagement se produit par rupture du fil.. Dans le cas de fils discontinus, l'endommagement peut se produire soit par glissement du fil dans la mousse soit par rupture. Mais quels que soient leurs points de rupture, chaque rupture de fils 31 dissipe une partie de l'énergie cinétique.

Ces fils de renfort 31 peuvent être piqués parallèles dans le coeur de mousse, dirigés longitudinalement par rapport au bord d'attaque 11. Ils peuvent aussi être piqués suivant deux directions perpendiculaires ou autre de façon à former un quadrillage, comme montré sur la figure 4. Dans ce cas, leur rupture permet une dissipation de l'énergie cinétique suivant plusieurs incidences.

Pour fabriquer un dispositif d'absorption d'énergie cinétique conforme à cette variante, le procédé de fabrication doit comporter une opération supplémentaire, entre l'étape c) et l'étape d), de piquage des fils dans le coeur en mousse.

Tous les modes de réalisation et variantes décrits précédemment permettent un mécanisme de déclenchement progressif de la dissipation de l'énergie cinétique. De cette façon, le coeur en mousse se détruit plus ou moins en fonction de l'énergie cinétique développée lors de l'impact.

## Revendications

1. Elément de structure d'aéronef susceptible d'être soumis à un impact dynamique, ledit élément comportant un bord d'attaque (11) et un bord de fuite (12), comportant un dispositif d'absorption d'énergie cinétique dans une zone du bord d'attaque, **caractérisé en ce que** ledit dispositif d'absorption d'énergie cinétique comporte:
- une enveloppe externe (21) en matériau composite tressé apte à conserver, après impact, une intégrité,
- un coeur en mousse (22), contenu dans l'enveloppe externe et apte à remplir au moins partiellement ladite enveloppe externe, ledit coeur en mousse étant apte à absorber au moins partiellement l'énergie cinétique générée par l'impact,
- des éléments de renfort comportant au moins une préforme en fibres composites sèches (30) intégrée dans le coeur en mousse pour dissiper, en association avec le coeur en mousse, l'énergie cinétique générée par l'impact.

2. Elément de structure d'aéronef selon la revendication 1, **caractérisé en ce que** ledit élément est un élément de structure tournant.

3. Elément de structure d'aéronef selon l'une des revendications 1 ou 2, **caractérisé en ce que** la préforme en fibres composites sèches forme un tissu entourant une partie du coeur en mousse.

4. Elément de structure d'aéronef selon la revendication 3, **caractérisé en ce que** les éléments de renfort comportent plusieurs préformes en fibres composites sèches formant chacune un tissu apte à entourer une partie du coeur en mousse de façon à cloisonner ledit coeur en mousse.

5. Elément de structure d'aéronef selon l'une quelconque des revendications 1 à 4, **caractérisé en ce que** les fibres sèches sont en carbone, en aramide et/ou en PBO.

6. Elément de structure d'aéronef selon l'une quelconque des revendications 1 à 5, **caractérisé en ce que** l'enveloppe externe (21) comporte une pluralité de plis de mèches imprégnées, tressées avec au moins deux fibres sèches.

7. Elément de structure d'aéronef selon l'une quelconque des revendications 1 à 6, **caractérisé en ce que** les éléments de renfort comprennent des fils insérés par piquage dans le coeur en mousse.

8. Elément de structure d'aéronef selon la revendication 7, **caractérisé en ce que** les fils sont imprégnés d'une résine durcissante.

9. Procédé de fabrication d'un dispositif d'absorption d'énergie cinétique pour être intégré dans un élément de structure d'aéronef susceptible d'être soumis à un impact dynamique, selon l'une quelconque des revendications 1 à 8, comportant les opérations suivantes :
a) fabriquer un bloc de mousse,
b) placer une préforme en fibres composites sèches autour du bloc de mousse,
c) intégrer une couche complémentaire de mousse autour du bloc de mousse et de la préforme en fibres composites sèches pour former un coeur en mousse, et
d) installation de l'enveloppe externe autour du coeur en mousse obtenu à l'étape c).

10. Procédé de fabrication d'un dispositif d'absorption d'énergie cinétique selon la revendication 9, **caractérisé en ce que** les étapes b) à c) sont répétées en plaçant une deuxième préforme en fibres composites sèches autour du coeur en mousse obtenu à l'étape c).

11. Procédé de fabrication d'un dispositif d'absorption d'énergie cinétique selon la revendication 9 ou 10, **caractérisé en ce qu'**il comporte une opération de piquage des fils dans le coeur en mousse obtenu à l'étape c), cette opération étant effectuée avant l'étape d) d'insertion du coeur en mousse dans l'enveloppe externe.

## Patentansprüche

1. Luftfahrzeugstrukturelement, das einem dynamischen Anprall ausgesetzt sein kann, umfassend eine Vorderkante (11) und eine Hinterkante (12), umfassend eine Vorrichtung zur Absorption kinetischer Energie in einem Bereich der Vorderkante, **dadurch gekennzeichnet, dass** die Vorrichtung zur Absorption kinetischer Energie umfasst:
- eine äußere Hülle (21) aus geflochtenem Verbundmaterial, die geeignet ist, nach dem Anprall ihre Unversehrtheit zu bewahren,
- einen Schaumstoffkern (22), der in der äußeren Hülle enthalten ist und geeignet ist, die äußere Hülle zumindest teilweise auszufüllen, wobei der Schaumstoffkern geeignet ist, die durch den Anprall erzeugte kinetische Energie zumindest teilweise zu absorbieren,
- Aussteifungselemente, die mindestens einen Vorformling aus trockenen Verbundfasern (30) umfassen, der in den Schaumstoffkern integriert ist, um im Zusammenwirken mit dem Schaumstoffkern die durch den Anprall erzeugte kinetische Energie abzuführen.

2. Luftfahrzeugstrukturelement nach Anspruch 1, **dadurch gekennzeichnet, dass** das Element ein drehendes Strukturelement ist.

3. Luftfahrzeugstrukturelement nach einem der Ansprüche 1 oder 2, **dadurch gekennzeichnet, dass** der Vorformling aus trockenen Verbundfasern ein Gewebe bildet, das einen Teil des Schaumstoffkerns umgibt.

4. Luftfahrzeugstrukturelement nach Anspruch 3, **dadurch gekennzeichnet dass** die Aussteifungselemente mehrere Vorformlinge aus trockenen Verbundfasern umfassen, die jeweils ein Gewebe bilden, das geeignet ist, einen Teil des Schaumstoffkerns so zu umgeben, dass der Schaumstoffkern unterteilt wird.

5. Luftfahrzeugstrukturelement nach einem der Ansprüche 1 bis 4, **dadurch gekennzeichnet, dass** die trockenen Fasern aus Carbon, Aramid und/oder PBO bestehen.

6. Luftfahrzeugstrukturelement nach einem der Ansprüche 1 bis 5, **dadurch gekennzeichnet, dass** die äußere Hülle (21) eine Vielzahl von Lagen aus imprägnierten Faserbändern umfasst, die mit mindestens zwei trockenen Fasern verflochten sind.

7. Luftfahrzeugstrukturelement nach einem der Ansprüche 1 bis 6, **dadurch gekennzeichnet, dass** die Aussteifungselemente Fäden umfassen, die in den Schaumstoffkern eingenäht sind.

8. Luftfahrzeugstrukturelement nach Anspruch 7, **dadurch gekennzeichnet, dass** die Fäden mit einem aushärtenden Harz imprägniert sind.

9. Verfahren zur Herstellung einer Vorrichtung zur Absorption kinetischer Energie zwecks Integration in ein Luftfahrzeugstrukturelement, das einem dynamischen Anprall ausgesetzt sein kann, nach einem der Ansprüche 1 bis 8, umfassend die folgenden Arbeitsschritte:
a) Herstellen eines Schaumstoffblocks,
b) Anordnen eines Vorformlings aus trockenen Verbundfasern um den Schaumstoffblock herum,
c) Integrieren einer ergänzenden Schaumstoffschicht um den Schaumstoffblock und den Vorformling aus trockenen Verbundfasern herum, um einen Schaumstoffkern zu bilden, und
d) Anbringen der äußeren Hülle um den im Schritt c) erhaltenen Schaumstoffkern herum.

10. Verfahren zur Herstellung einer Vorrichtung zur Absorption kinetischer Energie nach Anspruch 9, **dadurch gekennzeichnet, dass** die Schritte b) bis c) wiederholt werden, indem ein zweiter Vorformling aus trockenen Verbundfasern um den im Schritt c) erhaltenen Schaumstoffkern herum angeordnet wird.

11. Verfahren zur Herstellung einer Vorrichtung zur Absorption kinetischer Energie nach Anspruch 9 oder 10, **dadurch gekennzeichnet, dass** es einen Arbeitsschritt des Einnähens der Fäden in den im Schritt c) erhaltenen Schaumstoffkern umfasst, wobei dieser Arbeitsschritt vor dem Schritt d) des Einsetzens des Schaumstoffkerns in die äußere Hülle ausgeführt wird.

## Claims

1. Aircraft structural element liable to be subjected to a dynamic impact, said element comprising a leading edge (11) and a trailing edge (12), comprising a kinetic energy absorption device in a region of the leading edge, **characterized in that** said kinetic energy absorption device comprises:
- an outer casing (21) made of braided composite able, after impact, to maintain a degree of integrity,
- a foam core (22), contained inside the outer casing and able to fill said outer casing at least partially, said foam core being able at least partially to absorb the kinetic energy generated by the impact,
- reinforcing elements comprising at least one preform made of dry composite fibres (30) which is incorporated into the foam core in order, in association with the foam core, to dissipate the kinetic energy generated by the impact.

2. Aircraft structural element according to Claim 1, **characterized in that** said element is a rotary structural element.

3. Aircraft structural element according to either of Claims 1 and 2, **characterized in that** the preform made of dry composite fibres forms a fabric surrounding part of the foam core.

4. Aircraft structural element according to Claim 3, **characterized in that** the reinforcing elements comprise several preforms made of dry composite fibres each one forming a fabric able to surround part of the foam core so as to partition said foam core.

5. Aircraft structural element according to any one of Claims 1 to 4, **characterized in that** the dry fibres are made of carbon, aramid and/or PBO.

6. Aircraft structural element according to any one of Claims 1 to 5, **characterized in that** the outer casing (21) comprises a plurality of plies of impregnated rovings braided with at least two dry fibres.

7. Aircraft structural element according to any one of Claims 1 to 6, **characterized in that** the reinforcing elements comprise filaments inserted into the foam core by stitching.

8. Aircraft structural element according to Claim 7, **characterized in that** the filaments are impregnated with a curable resin.

9. Method for manufacturing a kinetic energy absorption device to be integrated into an aircraft structural element liable to be subjected to a dynamic impact according to any one of Claims 1 to 8, comprising the following operations:
a) manufacturing a block of foam,
b) placing a preform made of dry composite fibres around the block of foam,
c) integrating an additional layer of foam around the block of foam and the preform made of dry composite fibres in order to form a foam core, and
d) installing the outer casing around the foam core obtained in step c).

10. Method for manufactoring a kinetic energy absorption device according to Claim 9, **characterized in that** steps b) to c) are repeated, placing a second preform made of dry composite fibres around the foam core obtained in step c).

11. Method for manufactoring a kinetic energy absorption device according to Claim 9 or 10, **characterized in that** it comprises an operation of stitching filaments into the foam core obtained in step c), this operation being performed prior to step d) of inserting the foam core inside the outer casing.
